# EUROPEAN PATENT APPLICATION

(11) **EP 3 318 896 A1**
(43) Date of publication of application: **09.05.2018**
(21) Application number: 17199057.5
(22) Date of filing: 27.10.2017
(51) Int. Cl.: G01S 17/87, G01S 17/58, G01S 17/95

(54) **SYSTEMS AND METHODS FOR USING DISSIMILAR LIDAR TECHNOLOGIES**

(30) Priority: 03.11.2016 US 201615343201
(71) Applicant: Honeywell International Inc., Morris Plains, NJ 07950 (US)
(72) Inventor: GARDE, Jason, Morris Plains, NJ New Jersey 07950 (US); FAN, Xiao Zhu, Morris Plains, NJ New Jersey 07950 (US); LODDEN, Grant, Morris Plains, NJ New Jersey 07950 (US); KIMMEL, Danny Thomas, Morris Plains, NJ New Jersey 07950 (US)
(74) Representative: Houghton, Mark Phillip

(57) **Abstract**

Systems and methods for using dissimilar LIDAR technologies are provided. In at least one implementation a system for gathering LIDAR data comprises one or more LIDAR optical modules (106,108) configured to provide data from optical measurements of an environment; one or more processing units configured to process the data provided by the one or more LIDAR optical modules (106,108); and wherein the one or more processing units produces a plurality of similar LIDAR measurements, wherein the plurality of similar LIDAR measurements were produced using at least one of dissimilar processing and LIDAR optical modules (106,108).

## Description

### BACKGROUND

LiDAR is a remote sensing technology that may be used in data sensing technology for sensing characteristics about an environment. In contrast to other data sensing technologies, LiDAR technology may have inherent enhanced safety and reliability benefits stemming from the ability of the technology to be flush mounted with the skin of a vehicle, while sensing data parameters. These safety and reliability benefits are due to LiDAR being less susceptible to particular common mode failures such as icing and other problems that may exist for other technologies for sensing data parameters for an environment. However, the sensing of data parameters using LiDAR technologies may be subject to common mode failures unique to LiDAR technologies.

### SUMMARY

Systems and methods for using dissimilar LIDAR technologies are provided. In at least one implementation A system for gathering LIDAR data comprises one or more LIDAR optical modules configured to provide data from optical measurements of an environment; one or more processing units configured to process the data provided by the one or more LIDAR optical modules; and wherein the one or more processing units produces a plurality of similar LIDAR measurements, wherein the plurality of similar LIDAR measurements were produced using at least one of dissimilar processing and LIDAR optical modules.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a diagram of a system having a plurality of LIDAR data systems according to one implementation described herein;
Figure 2 is a block diagram illustrating a LIDAR data system according to one implementation described herein;
Figure 3 is a block diagram illustrating a LIDAR data system according to one implementation described herein;
Figure 4 is a block diagram illustrating a LIDAR data system according to one implementation described herein; and
Figure 5 is a flow diagram illustrating a method for gathering LIDAR data in accordance with embodiments described herein.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

Systems and methods for using dissimilar LiDAR technologies are described herein. LiDAR data system may consist of different LiDAR optical modules feeding to their respective processor to produce independent LiDAR data parameters. These different LiDAR optical modules may have different wavelengths, optical signals, hardware, among other differences. If a failure or degradation occurs within a LiDAR module, the prevailing LiDAR optical modules can continue to provide uncompromised functionality. Similarly, if a failure or degradation occurs within a LiDAR processor the prevailing LiDAR processors may continue to provide uncompromised processed data output.

LiDAR air data system consists of different independent LIDAR processors which share all or only a percentage of the LIDAR optical modules (e.g., emitter only, receiver only, a percentage of the spectrum, etc). The different LIDAR processors can include, but not limited to, different hardware, software, and/or processing algorithms to independently process data parameters. If a failure or degradation occurs within a single processor, the prevailing LIDAR processors can continue to provide uncompromised functions.

LiDAR air data system consists of different independent LiDAR optical modules which share at least a percentage of the LiDAR processor (e.g., storage medium only, selective algorithm function, processor hardware, etc.). The different LiDAR optical modules can use, but are not limited to, different wavelengths, optical signals, and/or hardware to independently interrogate and collect optical data measurements. If a failure or degradation occurs within a single optical module, the prevailing LIDAR optical modules can continue to provide uncompromised functions.

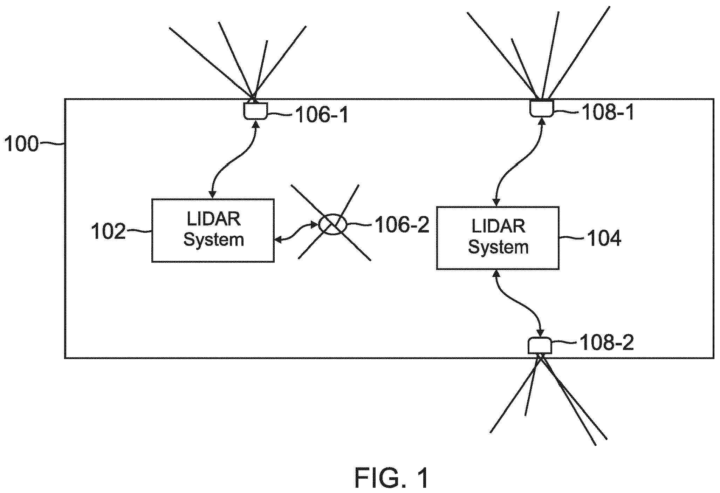

Figure 1 is a block diagram of a system 100 having dissimilar LIDAR data systems, such as dissimilar LIDAR air data systems. As known to one having skill in the art, a LIDAR data system emits a laser to interrogate an interrogation volume. For example, a LIDAR air data system emits a laser to interrogate a volume of air. The emitted laser is reflected by the volume back towards the LIDAR data system. When the LIDAR data system receives a backscatter signal, the LIDAR data system, using one or more measurements such as measurements derived from an analysis of the backscatter spectrum of the backscatter signal, the LIDAR data system may calculate multiple parameters describing the environment of the system 100 and the motion of the system 100. For example, the backscatter spectrum may be analyzed to derive air data parameters such as wind velocity, temperature, pressure, angle of attack (AOA), angle of sideslip (AOS), among other parameters.

In at least one implementation, the system 100 may be implemented on a vehicle. For example, the system 100 may be located on a car, train, an aircraft, or other vehicle where the sensing of external parameters may be benefited through the use of dissimilar LIDAR data systems. The system 100 may use the LIDAR data systems to provide information related to mapping of the environment, velocity of the vehicle, wind velocity, temperature, pressure, AOA, AOS, among other parameters.

In certain embodiments, as illustrated in Figure 1, the system 100 includes multiple LIDAR data systems. For example, the system 100 includes a first LIDAR system 102 and a second LIDAR data system 104. The first LIDAR data system 102 includes one or more optical modules 106. The optical modules 106 emit laser light from the body of the system 100 in directions that are within the line of sight from the optical modules 106. In the event that the system 100 is located on a vehicle, such as an airplane, the optical modules 106 may include two or more optical modules. For example, in a system having two optical modules, the system may include a side optical module 106-1 and a top optical module 106-2. The orientation of the side optical module 106-1 and the top optical module 106-2 are exemplary as the optical modules may be in multiple different orientations at multiple different locations on the vehicle. The side optical module 106-1 may be located on the side of the vehicle and the top optical module 106-2 may be located on the top of the vehicle. Both the side optical module 106-1 and the top optical module 106-2 provide information acquired from their respective emitted laser beams as a data signal to a processor or processors that are part of the first LIDAR data system 102. Further, the different optical modules 106-1 and 106-2 may have different functionality. For example, the side optical module 106-1 and top optical module 106-2 may operate as an emitter only/receiver only, each of the optical modules 106 may operate over different frequencies of the spectrum, or each of the different optical modules 106 may use different frequency differentiation schemes. In certain implementations, when the optical modules 106 operate over different frequencies of the spectrum, the optical modules 106 operate in different frequencies that are dissimilar for different failure modes. Alternatively, the side optical module 106-1 and the top optical module 106-2 may also be designed to have the same operational configuration.

In certain embodiments, where the system 100 includes multiple LIDAR systems such as the first LIDAR data system 102 and the second LIDAR data system 104, the different LIDAR data systems may be connected to respective optical modules that scan different sections of the environment in which the system 100 exists. As described above, the first LIDAR data system 102 may communicate with a top optical module 106-2 and a side optical module 106-1. In the embodiment described above, the top optical module 106-2 is located on a surface of the system 100 that is perpendicular to the surface on which the side optical module 106-1 is mounted, however, other orientations may be implemented. In contrast to the first LIDAR data system 102, the second LIDAR data system 104 may communicate with a first side optical module 108-1 and a second side optical module 108-2. The first side optical module 108-1 and the second side optical module 108-2 may function over the similar operational ranges, the optical modules 108 may operate over different frequencies of the spectrum, or each of the different optical modules 108 may use different frequency differentiation schemes. In certain implementations, when the optical modules 108 operate over different frequencies of the spectrum, the optical modules 108 may operate in different frequencies that are dissimilar for different failure modes. As illustrated in Figure 1, the first side optical module 108-1 and the second side optical module 108-2 may be positioned on opposite sides of the system 100. Also as illustrated, the first side optical module 108-1 and the side optical module 106-1 may be positioned on the same side of the system. The optical modules 108 provide data signals to one or more processors located in the LIDAR data system 104.

As the system 100 includes multiple LIDAR systems, where each LIDAR system includes one or more processors and one or more optical modules, the system 100 is able to take advantage of the diversity of signals produced by the different LIDAR systems. In particular, the different LIDAR systems may implement dissimilar LiDAR technologies. For example, both LIDAR data systems 102 and 104 may each communicate with different LIDAR optical modules, where the different LIDAR optical modules may also communicate with different processors. The diversity of components in the LIDAR data systems 102 and 104 may produce independent LIDAR data parameters that are not subject to common mode failures. As such, if a failure or degradation occurs within one of the LIDAR optical modules or within a processor, the other LIDAR optical modules and processors may continue to provide the desired functionality.

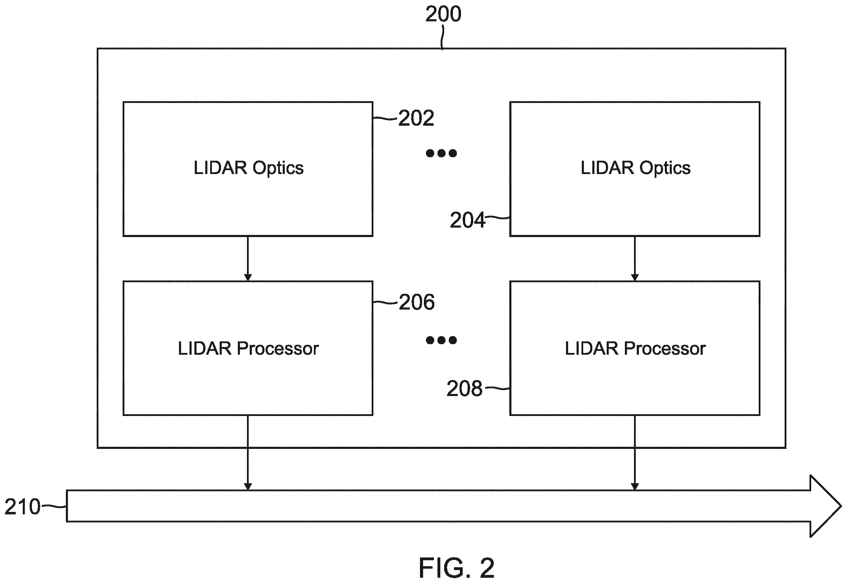

Figure 2 is a block diagram of a LIDAR data system 200, such as those described above with regards to Figure 1. The LIDAR data system 200 includes one or more LIDAR optical modules 202 and 204, where each optical module is coupled to an associated LIDAR processor 206 and 208. As shown, the LIDAR optical module 202 provides signals to LIDAR processor 206. Similarly, the LIDAR optical module 204 provides signals to LIDAR processor 208. The LIDAR data system 200 may include other optical modules, where the optical modules also have associated processors. The optical modules 202 and 204 may operate using dissimilar LiDAR technologies. For example, the optical modules 202 and 204 may operate with different wavelengths, optical signals, or the optical modules 202 and 204 may operate using different hardware. Further, each of the optical modules 202 and 204 may operate over different frequencies of the spectrum, or each of the different optical modules 202 and 204 may use different frequency differentiation schemes. In certain implementations, when the optical modules 202 and 204 operate over different frequencies of the spectrum, the optical modules 202 and 204 may operate in different frequencies that are dissimilar for different failure modes. The optical modules may also be located on different locations of the vehicle. If a failure or degradation occurs within an optical module, the remaining optical modules may still provide a signal to their respective processor.

Also, as illustrated, the LIDAR data system 200 consists of different independent LIDAR processors 206 and 208 which communicate with their associated optical modules 202 and 204. The different LIDAR processors 206 and 208 may operate differently from one another. For example, the different LIDAR processors 206 and 208 may operate on different hardware. Further, the different LIDAR processors 206 and 208 may execute different software and/or processing algorithms to independently process data parameters received from their respective optical modules. Further, the LIDAR processors 206 and 208 each may provide processed data to other systems through a data bus 210 or other communicative means. Thus, the LIDAR data system 200 may include multiple LIDAR systems that function separately from one another.

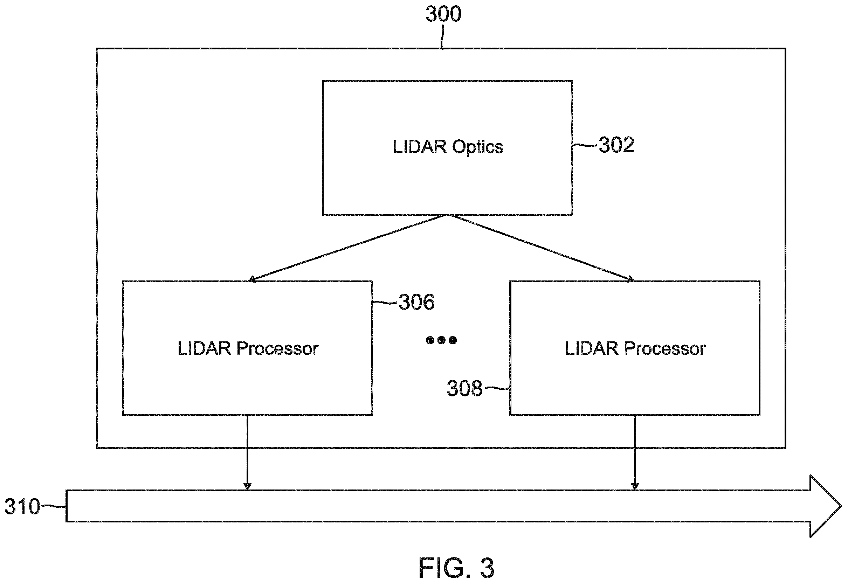

Figure 3 is a block diagram of a LIDAR data system 300, such as those described above with regards to Figure 1. The LIDAR data system 300 includes a LIDAR optical module 302, where the optical module 302 is coupled to multiple LIDAR processors 306 and 308. As shown, the LIDAR optical module 302 provides signals to both LIDAR processor 306 and LIDAR processor 308. The LIDAR data system 300 may include other optical modules, where the optical modules also have associated processors that provide signals to one or more LIDAR processors.

In at least one implementation, as illustrated, the LIDAR data system 300 consists of different independent LIDAR processors 306 and 308 which communicate with the optical modules 302. The different LIDAR processors 306 and 308 may operate differently from one another. For example, the different LIDAR processors 306 and 308 may operate on different hardware. Further, the different LIDAR processors 306 and 308 may execute different software and/or processing algorithms to independently process data parameters received from the shared optical module. Further, the LIDAR processors 306 and 308 each may provide processed data to other systems through a data bus 310 or other communicative means. Thus, the LIDAR data system 300 may include multiple LIDAR processors that function separately from one another.

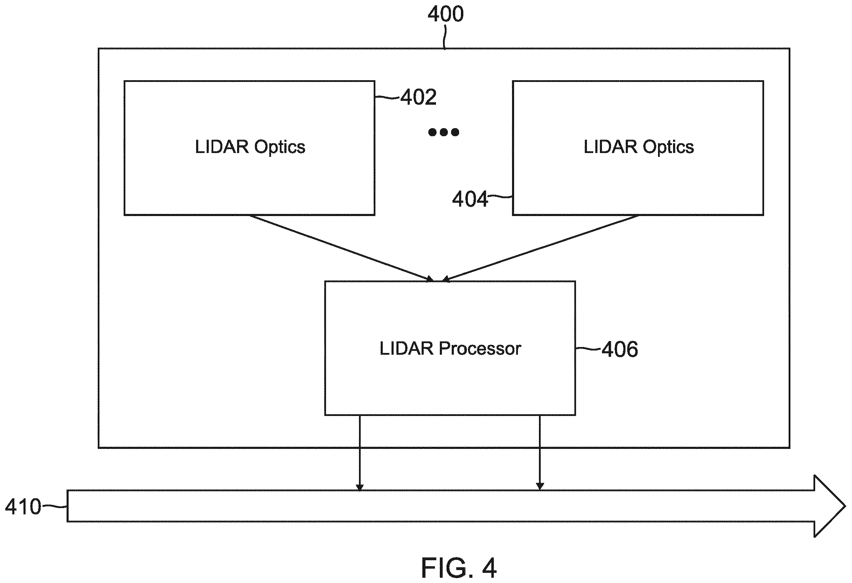

Figure 4 is a block diagram of a LIDAR data system 400, such as those described above with regards to Figure 1. The LIDAR data system 400 includes one or more LIDAR optical modules 402 and 404, where the optical modules 402 and 404 are coupled to a single LIDAR processor 406. The LIDAR data system 400 may include other optical modules, where the optical modules provide measurements to the shared processor. The optical modules 402 and 404 may operate using dissimilar LiDAR technologies. For example, the optical modules 402 and 404 may operate with different wavelengths, optical signals, or the optical modules 402 and 404 may operate using different hardware. Further, each of the optical modules 402 and 404 may operate over different frequencies of the spectrum, or each of the different optical modules 402 and 404 may use different frequency differentiation schemes. In certain implementations, when the optical modules 402 and 404 operate over different frequencies of the spectrum, the optical modules 402 and 404 may operate in different frequencies that are dissimilar for different failure modes. The optical modules 402 and 404 may also be located at different locations of the vehicle. If a failure or degradation occurs within an optical module, the remaining optical modules may still provide a signal to the shared processor. Further, the LIDAR processor 406 may execute different software and/or processing algorithms associated with the different optical modules 402 and 404. For example, the LIDAR processor 406 may execute the different software and/or processing algorithms on separate partitions. Further, the LIDAR processor 406 may provide processed data to other systems through a data bus 410 or other communicative means. Thus, the LIDAR data system 400 may include multiple LIDAR optical modules 402 and 404 that function separately from one another.

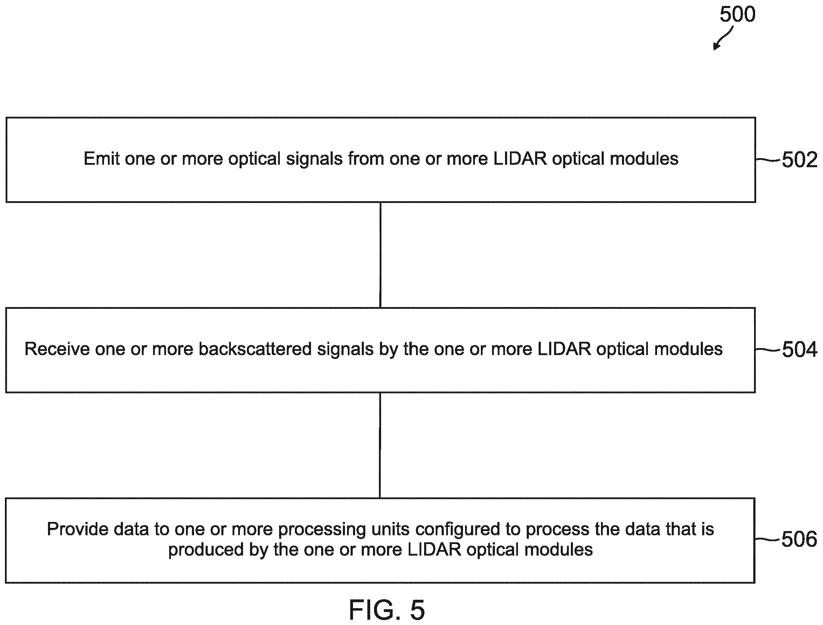

Figure 5 is a flow diagram of a method 500 for gathering LIDAR data. Method 500 proceeds at 502, where one or more optical signals is emitted from one or more LIDAR optical modules. All or a portion of the one or more LIDAR optical modules may function as emitters and different emitting LIDAR optical modules may emit light over different portions of the spectrum. Method 500, then proceeds at 504, where one or more backscattered signals is received by the one or more LIDAR optical modules. The received signals may be used by the one or more LIDAR optical modules to produce data from optical measurements of an environment. In a similar manner, all or a portion of the one or more LIDAR optical modules may function as receivers and different receiving LIDAR optical modules may receive backscattered signals over different portions of the spectrum.

In certain embodiments, method 500 proceeds at 506, where the data is provided to one or more processing units configured to process the data produced by the one or more LIDAR optical modules, wherein the one or more processing units produces a plurality of dissimilar LiDAR measurements. In at least one embodiment, each processing unit in the one or more processing unit receives data from one or multiple LIDAR optical modules. Further, different processing units may execute different software and/or algorithms, or may be comprised of different hardware. The processing units may then provide the plurality of dissimilar LIDAR measurements to different computations systems through a data bus, or other transmission means, such as a wireless signal.

### Example Embodiments

Example 1 includes a system for gathering LiDAR data, the system comprising: one or more LIDAR optical modules configured to provide data from optical measurements of an environment; one or more processing units configured to process the data provided by the one or more LIDAR optical modules; and wherein the one or more processing units produces a plurality of similar LIDAR measurements, wherein the plurality of similar LIDAR measurements were produced using at least one of dissimilar processing and LIDAR optical modules.

Example 2 includes the system of Example 1, wherein each of the one or more LIDAR optical modules is associated with one of the one or more processing units.

Example 3 includes the system of any of Examples 1, wherein at least one of the one or more processing units receives data provided from a plurality of LIDAR optical modules.

Example 4 includes the system of any of Examples 1, wherein at least one of the one or more LIDAR optical modules provides data to a plurality of processing units in the one or more processing units.

Example 5 includes the system of any of Examples 1, wherein a first portion of the one or more LIDAR optical modules function as emitters and a second portion of the one or more LIDAR optical modules function as receivers.

Example 6 includes the system of any of Examples 1, wherein different LIDAR optical modules in the one or more optical modules operate on different portions of the electromagnetic spectrum.

Example 7 includes the system of any of Examples 1, wherein at least two LIDAR optical modules in the one or more optical modules operate using different receive optics.

Example 8 includes the system of any of Examples 1, wherein at least a pair of different processing units in the one or more processing units execute different software.

Example 9 includes the system of any of Examples 1, wherein the one or more LIDAR optical modules provide data to a portion of a processing unit in the one or more processing units.

Example 10 includes the system of any of Examples 1, wherein at least a pair of different processing units in the one or more processing units execute on different hardware.

Example 11 includes a method for gathering LiDAR data, the system comprising: emitting one or more optical signals from one or more LIDAR optical modules; receiving one or more backscattered signals by the one or more LIDAR optical modules, wherein the one or more LIDAR optical modules produce data from measurements of an environment; and providing the data to one or more processing units configured to process the data produced by the one or more LIDAR optical modules, wherein the one or more processing units produces a plurality of similar LIDAR measurements, wherein the plurality of similar LIDAR measurements were produced using at least one of dissimilar processing and LIDAR optical modules.

Example 12 includes the method of Example 11, wherein each of the one or more LIDAR optical modules provides signals to one of the one or more processing units.

Example 13 includes the method of any of Examples 11, wherein at least one of the one or more processing units receives data provided from a plurality of LIDAR optical modules.

Example 14 includes the method of any of Examples 11, wherein at least one of the one or more LIDAR optical modules provides data to a plurality of processing units in the one or more processing units.

Example 15 includes the method of any of Examples 11 wherein at least two LIDAR optical modules in the one or more optical modules operate using different receive optic.

Example 16 includes the method of any of Examples 11-15, wherein different LIDAR optical modules in the one or more optical modules operate on different portions of the electromagnetic spectrum.

Example 17 includes the method of any of Examples 11, wherein at least a pair of different processing units in the one or more processing units execute different software.

Example 18 includes the method of any of Examples 11, wherein the one or more LIDAR optical modules provide data to a portion of a processing unit in the one or more processing units.

Example 19 includes the method of any of Examples 11, wherein at least a pair of different processing units in the one or more processing units execute on different hardware.

Example 20 includes a system for gathering LIDAR data, the system comprising: one or more LIDAR optical modules configured to provide data from optical measurements of an environment; one or more processing units configured to process the data provided by the one or more LIDAR optical modules, wherein the one or more processing units produces a plurality of similar LIDAR measurements, wherein the plurality of similar LIDAR measurements were produced using at least one of dissimilar processing and LIDAR optical modules; and a data bus coupled to the one or more processing units, wherein the plurality of dissimilar LIDAR measurements are provided to other computation systems through the data bus.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system for gathering LiDAR data, the system comprising:
one or more LIDAR optical modules (106, 108) configured to provide data from optical measurements of an environment;
one or more processing units (206, 208) configured to process the data provided by the one or more LIDAR optical modules; and
wherein the one or more processing units (206, 208) produces a plurality of similar LIDAR measurements, wherein the plurality of similar LIDAR measurements were produced using at least one of dissimilar processing and LIDAR optical modules.

2. The system of claim 1, wherein each of the one or more LIDAR optical modules (106, 108) is associated with one of the one or more processing units (206, 208).

3. The system of claim 1, wherein at least one of the one or more processing (206, 208) units receives data provided from a plurality of LIDAR optical modules (106, 108).

4. The system of claim 1, wherein at least one of the one or more LIDAR optical modules (106, 108) provides data to a plurality of processing units in the one or more processing units (206, 208).

5. The system of claim 1, wherein different LIDAR optical modules in the one or more optical modules (106, 108) operate on different portions of the electromagnetic spectrum.

6. The system of claim 1, wherein at least two LIDAR optical modules in the one or more optical modules (106, 108) operate using different receive optics.

7. The system of claim 1, wherein at least a pair of different processing units in the one or more processing units (206, 208) execute on different hardware.

8. A method for gathering LiDAR data, the system comprising:
emitting one or more optical signals from one or more LIDAR optical modules (106, 108);
receiving one or more backscattered signals by the one or more LIDAR optical modules (106, 108), wherein the one or more LIDAR optical modules (106, 108) produce data from measurements of an environment; and
providing the data to one or more processing units (206, 208) configured to process the data produced by the one or more LIDAR optical modules (106, 108), wherein the one or more processing units (206, 208) produces a plurality of similar LIDAR measurements, wherein the plurality of similar LIDAR measurements were produced using at least one of dissimilar processing and LIDAR optical modules.

9. The method of claim 8, wherein each of the one or more LIDAR optical modules (106, 108) provides signals to one of the one or more processing units (206, 208).

10. The method of claim 8, wherein at least one of the one or more processing units (206, 208) receives data provided from a plurality of LIDAR optical modules.
